# EUROPEAN PATENT SPECIFICATION

(11) **EP 3 376 164 B1**
(45) Date of publication and mention of the grant of the patent: **25.12.2019**
(21) Application number: 18154380.2
(22) Date of filing: 31.01.2018
(51) Int. Cl.: G01C 21/34, G01C 21/36

(54) **METHOD OF DISPLAYING A TRAVELING ROUTE, INFORMATION PROCESSING APPARATUS AND PROGRAM**
VERFAHREN ZUR ANZEIGE EINER REISEROUTE, INFORMATIONSVERARBEITUNGSVORRICHTUNG UND PROGRAMM
PROCÉDÉ D'AFFICHAGE D'UN ITINÉRAIRE DE DÉPLACEMENT, APPAREIL DE TRAITEMENT D'INFORMATIONS ET PROGRAMME

(30) Priority: 15.03.2017 JP 2017050593
(43) Date of publication of application: 19.09.2018
(73) Proprietor: FUJITSU LIMITED, Kanagawa 211-8588 (JP)
(72) Inventor: KUJI, Yasunori, Aomori-shi, Aomori 030-0823 (JP); SAITO, Tomoe, Hirosaki-shi, Aomori 036-8064 (JP)
(74) Representative: Hoffmann Eitle

(56) References cited:
- EP-A2- 1 323 151
- US-A1- 2010 262 362
- US-A1- 2011 224 896
- US-A1- 2013 103 313

## Description

### TECHNICAL FIELD

The embodiment discussed herein is related to a method of displaying a traveling route, an information processing apparatus and a program.

### BACKGROUND ART

In general, navigation is performed to guide a user by receiving a departure point and a destination point from a terminal apparatus, such as a personal computer (PC) or a smartphone, searching for a route from the departure point to the destination point, and displaying the obtained route. In such navigation, a technique of searching for a plurality of routes and displaying the routes as a list in an identification available manner has been used. Japanese Laid-open Patent Publication No. 2009-36541 discusses such a technique.

Document EP 1 323 151 A1 describes a logic method and apparatus for textually displaying an original flight plan and a modified flight plan simultaneously.

Document US 2013/0103313 A1 describes devices and methods for comparing and selecting alternative navigation routes.

Document US 2011/0224896 A1 describes a method for providing touch-based routing services.

Document US 2010/0262362 A1 describes a travel plan presenting apparatus accumulating travel histories of a mobile object from a departure place to an arrival place, retrieving, as travel patterns, travel histories each including a current position and travel histories each including a current position and the arrival place, respectively, and extracting and displaying one of the travel patterns.

### SUMMARY

### [TECHNICAL PROBLEMS]

In the general technique, there arises a problem in that it is difficult to search for a route from a departure point to a destination point through a transit point, such as a sightseeing spot. For example, in the general technique described above, a transit point is selected in a plurality of routes, and therefore, a degree of freedom is low in the selection of the transit point, and therefore, the general technique is inconvenience.

According to an aspect of the present disclosure, there is provided a display control program, a travel plan editing program, a display control method, and an information processing apparatus which may easily search for a route through a transit point.

### [SOLUTION TO PROBLEMS]

The above object is solved by the subject matter of the independent claims where advantageous embodiments are described in the dependent claims. Examples and technical descriptions of apparatuses, products and/or methods in the description and/or drawings which are not covered by the claims are presented as background art or examples useful for understanding the invention. According to an aspect of an example, a method of displaying a traveling route from a first point to a second point executed by a computer, the method includes receiving information specifying the first point and the second point, displaying a first traveling route including a plurality of transit points between the first point and the second point, and another transit point which is a substitute of a first transit point included in the plurality of transit points, receiving a selection signal for selecting the another transit point instead of the first transit point, and displaying, based on the selection signal, a second traveling route obtained by replacing the first transit point by the another transit point without changing a transit point coupled to the first transit point in the first traveling route.

### [ADVANTAGES]

According to an embodiment of the present disclosure, a route through a transit point may be easily searched for.

### BRIEF DESCRIPTION OF DRAWINGS

FIG. 1 is a diagram illustrating an example of an entire configuration of a system according to an embodiment;
FIG. 2 is a block diagram illustrating an example of a functional configuration of an information processing apparatus according to the embodiment;
FIG. 3 is an explanatory diagram illustrating a sightseeing spot database (DB) and a travel plan DB;
FIG. 4 is a flowchart of an example of an operation of the information processing apparatus according to the embodiment;
FIG. 5 is a diagram illustrating an example of a route display screen;
FIG. 6 is a diagram illustrating an example of the route display screen;
FIG. 7 is a diagram illustrating an example of the route display screen;
FIG. 8 is an explanatory diagram illustrating display of a route through selected candidate points;
FIG. 9 is a flowchart of an example of an operation of the information processing apparatus according to the embodiment;
FIG. 10 is an explanatory diagram illustrating display of candidate points after a section is designated; and
FIG. 11 is a diagram illustrating an example of a computer which executes programs.

### DESCRIPTION OF EMBODIMENT

Hereinafter, a display control program, a travel plan editing program, a display control method, a travel plan editing method, and an information processing apparatus according to an embodiment will be described with reference to the accompanying drawings. In this embodiment, components having the same function are denoted by the same reference numeral so that redundant description is omitted. Note that the display control program, the travel plan editing program, the display control method, the travel plan editing method, and the information processing apparatus according to the embodiment described herein are merely examples and do not limit the embodiment. Furthermore, the embodiments described below may be appropriately combined with each other as long as any contradiction does not occur.

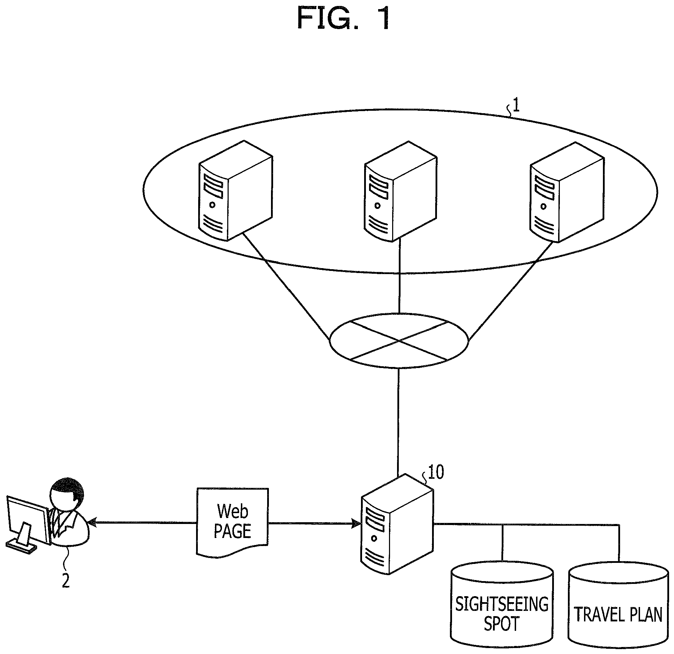

FIG. 1 is a diagram illustrating an example of an entire configuration of a system according to an embodiment. As illustrated in FIG. 1, the system includes a server group 1 including various servers and an information processing apparatus 10 which are connected to each other in a communication available manner through a communication network, such as the Internet.

The server group 1 includes various servers, such as a position specifying server and a route searching server. For example, the position specifying server specifies position information (latitude and longitude) with reference to a name of facility or a station. The route searching server calculates a route (traveling route) between two points by inputting information on at least the two points (positional information and facility names of a departure point and a destination point (and a transit point if any)).

For example, the route searching server calculates route information, a traveling form, a period of time, and a cost from the departure point to the destination point using positional information of the departure point and positional information of the destination point which are specified by the position specified server. Here, the route searching server calculates route information, a period of time and a cost for each traveling form, such as a train, a plain, walk, and a car.

The information processing apparatus 10 is a server apparatus which provides web pages of various information in response to requests supplied from a terminal device 2 operated by a user, and is operated in local governments and companies, for example. The information processing apparatus 10 stores information on travel plans to be provided for the user. The information processing apparatus 10 further stores information on sightseeing spots collected in advance for each area. The sightseeing spots indicate places where the user desires to visit in a travel, such as archaeological sites, festivals, and world heritages.

The information processing apparatus 10 provides a service of displaying a route and a plan of a travel via a sightseeing spot in a web page or the like for the user of the terminal device 2.

Specifically, the information processing apparatus 10 receives information on at least two points (a departure point and a destination point, for example) used to search for a route as an input from the terminal device 2 in a portal site, for example.

Subsequently, the information processing apparatus 10 notifies the position specifying server and the route searching server of the information supplied from the terminal device 2 and obtains route information on a route from the departure point to the destination point and a period of time and a cost for each traveling form. Thereafter, the information processing apparatus 10 searches for sightseeing spots located near the route based on the route information. The information processing apparatus 10 determines the obtained sightseeing spots as transit points, transmits information on the transit points to the position specifying server and the route searching server, and obtains route information on routes through the transit points and periods of time and costs for individual traveling forms.

Subsequently, the information processing apparatus 10 searches for sightseeing spots located near the transit points and determines the obtained sightseeing spots as candidates of substitutes of the transit points (candidates of transit points). Thereafter, as with the case of the transit points, the information processing apparatus 10 transmits information on the candidate points to the position specifying server and the route searching server, and obtains route information on routes through the candidate points and periods of times and costs for individual traveling forms.

The information processing apparatus 10 displays routes from the departure point through the transit points (the sightseeing spots) to the destination point based on the obtained information, generates a web page for displaying the candidate points of the substitutes of the transit points, and outputs the web page to the terminal device 2.

If the information processing apparatus 10 receives a selection of one of the candidate points as one of the transit points from the terminal device 2 when the routes are displayed, the information processing apparatus 10 generates a web page displaying a route including the selected candidate point without changing points before and after the selected transit point and outputs the web page to the terminal device 2. Accordingly, the user of the terminal device 2 may easily search for the route through the transit point. Furthermore, when receiving an instruction for registering the route to a travel plan from the terminal device 2 when the route is displayed, the information processing apparatus 10 stores the route being displayed as a new travel plan.

Furthermore, the information processing apparatus 10 receives a selection of a travel plan indicating details of an itinerary from among a plurality of travel plans by an input using the terminal device 2 through the portal site.

Thereafter, the information processing apparatus 10 transmits information on an itinerary from the departure point through the transit points (visiting points) to the destination point in the selected travel plan to the position specifying server and the route searching server included in the server group 1 so as to obtain route information of the itinerary (a route) of the travel plan and a period of time and a cost for each traveling form.

Then the information processing apparatus 10 generates a web page for displaying the route from the departure point through the transit points (the sightseeing spots) to the destination point of the selected travel plan based on the obtained information and outputs the web page to the terminal device 2.

In a case where the information processing apparatus 10 receives designation of a traveling section (a section between two transit points, for example) from the terminal device 2 when the route of the travel plan is displayed, the information processing apparatus 10 searches for sightseeing spots near the traveling section and determines the obtained sightseeing spots as candidates of visiting points. Thereafter, the information processing apparatus 10 notifies the position specifying server and the route searching server of information on the sightseeing spots of candidates of the visiting points and obtains route information on routes through the sightseeing spots and periods of time and costs for individual traveling forms for individual candidates of the sightseeing spots.

Subsequently, the information processing apparatus 10 generates a web page which displays the routes through the sightseeing spots of the candidates of the visiting points and which receives a selection of a new visiting point from among the sightseeing spots of the candidates of the visiting points, and outputs the web page to the terminal device 2. When receiving the new visiting point from the terminal device 2, the information processing apparatus 10 adds the selected sightseeing spot to the travel plan as a new visiting point to be added to the specified traveling section. By this, the user of the terminal device 2 may easily generate a plan of a travel through the new visiting point.

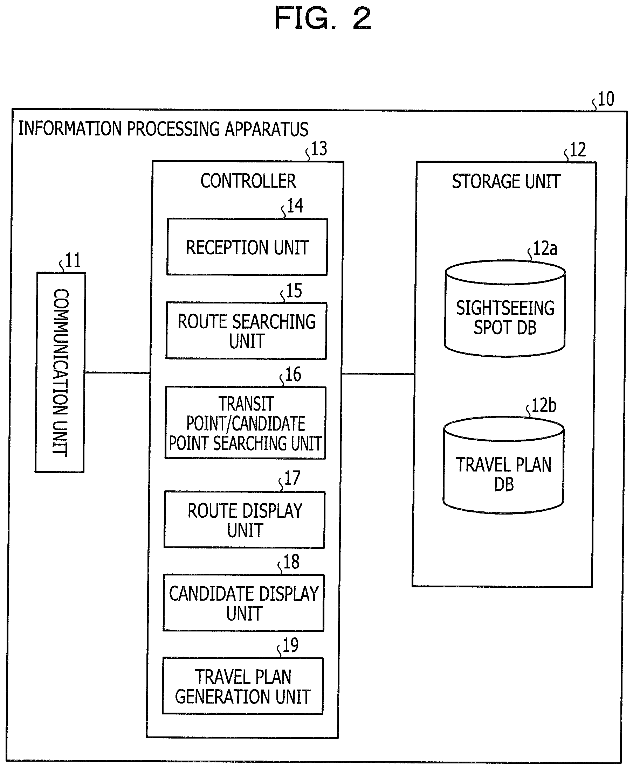

FIG. 2 is a block diagram illustrating an example of a functional configuration of the information processing apparatus 10 according to the embodiment. As illustrated in FIG. 2, the information processing apparatus 10 includes a communication unit 11, a storage unit 12, and a controller 13.

The communication unit 11 is a processor which controls communication with other apparatuses and is a network interface card, for example. The communication unit 11 transmits data to and receives data from the servers included in the server group 1 and executes communication through a web browser with the terminal device 2.

The storage unit 12 is a storage device, such as a memory or a hard disk, which stores programs to be executed by the controller 13, a sightseeing spot database (DB) 12a, and a travel plan DB 12b.

The sightseeing spot DB 12a stores information on sightseeing spots of various areas, and settings of the sightseeing spot DB 12a may be changed by an administrator, for example. The travel plan DB 12b stores information on travel plans indicating an itinerary from departure to arrival (a route including a departure point, a transit point, and a destination point, a time schedule, and the like). Examples of the information on travel plans include information determined by a travel agency in advance and a route obtained through the route searching by the user.

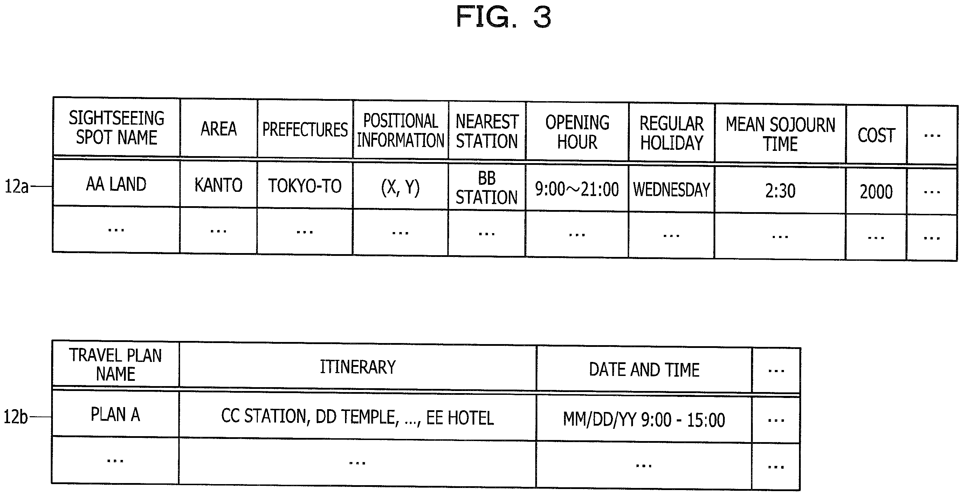

FIG. 3 is an explanatory diagram illustrating the sightseeing spot DB 12a and the travel plan DB 12b. As illustrated in FIG. 3, the sightseeing spot DB 12a stores a sightseeing spot name, an area, a prefecture, positional information, a nearest station, opening hours, a regular holiday, a mean sojourn time, and a cost which are associated with one another. Note that settings of the information stored here may be arbitrarily changed.

The sightseeing spot name indicates a name of a sightseeing spot and includes a popular name and an abbreviation. The area indicates information specifying a certain area including the sightseeing spot, such as Kanto, Kitakanto, or Shikoku. The prefecture indicates information specifying a location of the sightseeing spot, such as Tokyo-to or Osaka-fu. The positional information indicates a position of the sightseeing spot, such as latitude and longitude. The nearest station indicates information specifying a train station nearest to the sightseeing spot. The opening hours indicates opening hours of the sightseeing spot, and the regular holiday indicates a regular holiday of the sightseeing spot. The mean sojourn time indicates a mean sojourn time of persons who stay in the sightseeing spot. The cost indicates expenses for a visit of the sightseeing spot, such as an admission fee of the sightseeing spot.

In the example of FIG. 3, "AA land" is located in Tokyo-to in Kanto and has positional information of (X, Y), and a nearest station of AA land is BB station. Furthermore, opening hours of AA land is 9:00 to 21:00, and a regular holiday is Wednesday. A mean sojourn time of AA land is 2 hours and a half, and a cost is 2000 yen.

The travel plan DB 12b stores a travel plan name, an itinerary, and a date and time which are associated with one another. Note that settings of the information stored here may be arbitrarily changed. For example, information on a cost, a tour conductor, a first mode in intermodal passenger transport, a transport mode, names, locations, and admission fees of sightseeing spots in a tour, names, locations, and admission fees of restaurants in the tour, an expiration date of a package, and meal charges may be stored.

In the example of FIG. 3, a plan A indicates an itinerary including departure from CC station, a transit at DD temple, and arrival at EE hotel. Furthermore, the plan A indicates a time schedule including departure at 9:00 and arrival at 15:00 in mm/dd/yy.

The controller 13 controls an entire process of the information processing apparatus 10 and is a processor, for example. The controller 13 includes a reception unit 14, a route searching unit 15, a transit point/candidate point searching unit 16, a route display unit 17, a candidate display unit 18, and a travel plan generation unit 19. The reception unit 14, the route searching unit 15, the transit point/candidate point searching unit 16, the route display unit 17, the candidate display unit 18, and the travel plan generation unit 19 are examples of processes executed by a number of electronic circuits or the processor. Note that the route display unit 17 and the candidate display unit 18 are examples of a display unit, and the travel plan generation unit 19 is an example of a travel plan addition unit.

The reception unit 14 receives various instructions from the terminal device 2 through the communication unit 11. For example, the reception unit 14 receives information on at least two points (a departure point and a destination point, for example) used to search for a route from the terminal device 2. Furthermore, the reception unit 14 receives a selection of a candidate of one of transit points from the terminal device 2 when the route is displayed. The reception unit 14 receives an instruction for registering the route being displayed in a travel plan from the terminal device 2 when the route is displayed.

Furthermore, the reception unit 14 receives a selection of one of travel plans to be displayed as details of an itinerary from the terminal device 2. The reception unit 14 receives a designation of one of traveling sections (between two transit points, for example) when a route of the selected travel plan is displayed. The reception unit 14 receives a selection of a new visiting point from among sightseeing spots of candidates of the visiting points in the designated traveling section from the terminal device 2.

The route searching unit 15 searches for a route between the departure point and the destination point, that is, two points, based on information on at least the two points (and a transit point if any). For example, the route searching unit 15 notifies the position specifying server and the route searching server included in the server group 1 of information on the route searching, such as the points supplied from the terminal device 2 to the reception unit 14 and the itinerary of the travel plan so as to obtain information on the route from the departure point to the destination point and periods of time and costs for individual traveling forms.

Note that the route searching unit 15 may perform the route searching described above with reference to map information and traffic information (not illustrated) stored in the storage unit 12 instead of the position specifying server and the route searching server included in the server group 1.

The transit point/candidate point searching unit 16 searches the sightseeing spot DB 12a for transit points, candidates of substitutes of the transit points, and candidates of visiting points. Specifically, the transit point/candidate point searching unit 16 searches the sightseeing spot DB 12a for sightseeing spots located within a predetermined distance from a route based on the route information obtained by the route searching using the points received from the terminal device 2 and determines the obtained sightseeing spots as transit points. Furthermore, the transit point/candidate point searching unit 16 searches the sightseeing spot DB 12a for sightseeing spots located within a predetermined distance from transit points and determines the obtained sightseeing spots as candidates of substitutes of the transit points. Furthermore, when receiving a designation of a traveling section from the terminal device 2, the transit point/candidate point searching unit 16 searches the sightseeing spot DB 12a for sightseeing spots located within a predetermined distance from the route in the traveling section and determines the obtained sightseeing spots as candidates of visiting points.

The route display unit 17 generates display data (a web page, for example) for a route display screen which displays a route based on the information on a route obtained through the route searching performed by the route searching unit 15 and periods of time and costs for individual traveling forms.

The candidate display unit 18 adds display data for displaying the candidate points and the candidates of the visiting points obtained by the transit point/candidate point searching unit 16 to the display data generated by the route display unit 17 so as to generate display data for displaying the candidate points and the candidates of the visiting points in the route display screen of the route display unit 17.

The display data (a web page, for example) generated by the route display unit 17 and the candidate display unit 18 is transmitted to the terminal device 2 through the communication unit 11. By this, the terminal device 2 displays the route display screen. Note that the route display screen generated by the route display unit 17 and the candidate display unit 18 will be described hereinafter in detail.

The travel plan generation unit 19 generates a route being displayed in the route display screen as a travel plan. When receiving an instruction for determining a route from the terminal device 2 when a route is displayed in the route searching, for example, the travel plan generation unit 19 registers the route being displayed in the travel plan DB 12b as a new travel plan. Specifically, the travel plan generation unit 19 assigns a name of a travel plan and the like, determines the route being displayed from a departure point through a transit point to a destination point as an itinerary, a date and time is set to the travel plan, and thereafter, newly registers the travel plan in the travel plan DB 12b.

Furthermore, when receiving a selection of a certain sightseeing spot from among candidates of sightseeing spots in a certain traveling section while displaying a route of a travel plan registered in the travel plan DB 12b is displayed, the travel plan generation unit 19 adds the selected sightseeing spot to the travel plan as a new visiting point in the traveling section. Specifically, the travel plan generation unit 19 updates the travel plan registered in the travel plan DB 12b by the travel plan in which the visiting point is newly added to the certain traveling section.

Here, a process of receiving designation of two points (a departure point and a destination point) for searching for a route and displaying a route display screen which is performed by the information processing apparatus 10 will now be described in detail.

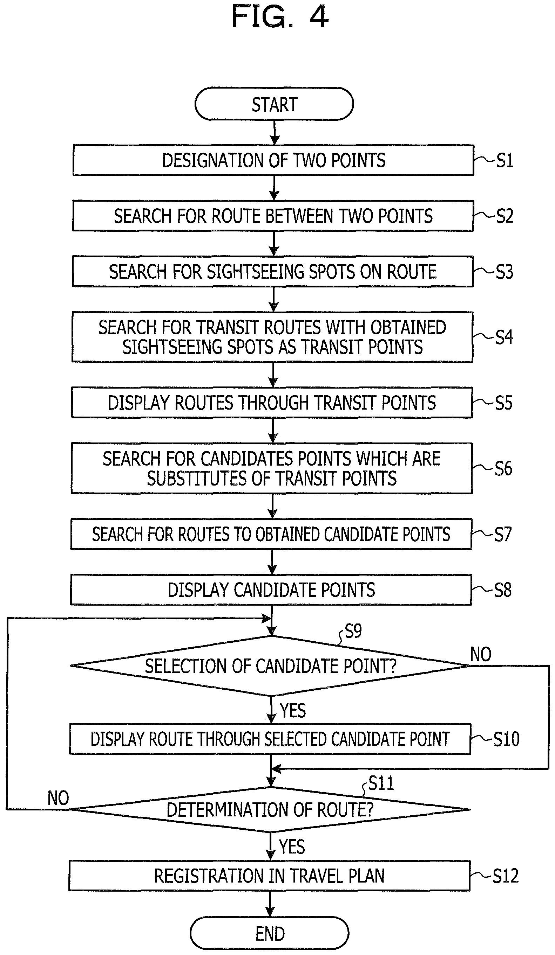

FIG. 4 is a flowchart of an example of an operation performed by the information processing apparatus 10 according to the embodiment. As illustrated in FIG. 4, when the process is started, the reception unit 14 receives a designation of two points (a departure point and a destination point) for searching for a route from the terminal device 2 (S1).

Subsequently, the route searching unit 15 performs route searching between the two points based on information on the designated two points (S2). Specifically, the route searching unit 15 notifies the position specifying server and the route searching server included in the server group 1 of information on the designated two points and obtains route information on a route from the departure point to the destination point and periods of time and costs for individual traveling forms.

Subsequently, the transit point/candidate point searching unit 16 searches the sightseeing spot DB 12a for sightseeing spots on the route based on the route information obtained by the route searching in step S2 (S3). Specifically, the transit point/candidate point searching unit 16 searches the sightseeing spot DB 12a for sightseeing spots located within a predetermined distance from the route.

Then the route searching unit 15 determines the obtained sightseeing spots on the route as transit points between the designated two points and searches for transit routes through the transit points between the two points similarly to the process in step S2 (S4). In this way, the information processing apparatus 10 obtains route information in a case where the transit points between the two points are to be visited and periods of time and costs for individual traveling forms.

Thereafter, the route display unit 17 generates display data for a transit display screen which displays the obtained transit routes based on the route information and the periods of time and costs for individual traveling forms which are obtained in step S4. The route display unit 17 transmits the generated display data to the terminal device 2 through the communication unit 11. By this, the terminal device 2 displays the route display screen (S5).

The transit point/candidate point searching unit 16 searches for candidate points which are substitutes of the transit points (S6). Specifically, the transit point/candidate point searching unit 16 searches the sightseeing spot DB 12a for sightseeing spots located within a predetermined distance from the transit points and determines the obtained sightseeing spots as candidates of substitutes of the transit points.

The route searching unit 15 searches for routes to the obtained candidate points (S7). Specifically, the route searching unit 15 transmits information on the candidate points instead of the transit points to the position specifying server and the route searching server, and obtains route information on routes through the candidate points instead of the transit points and periods of time and costs for individual traveling forms.

The candidate display unit 18 adds display data for displaying the candidate points obtained by the transit point/candidate point searching unit 16 to the display data for the route display screen in the individual transit points in the route display screen and transmits the display data to the terminal device 2. By this, the candidate points which are substitutes of the transit points are displayed in the route display screen (S8).

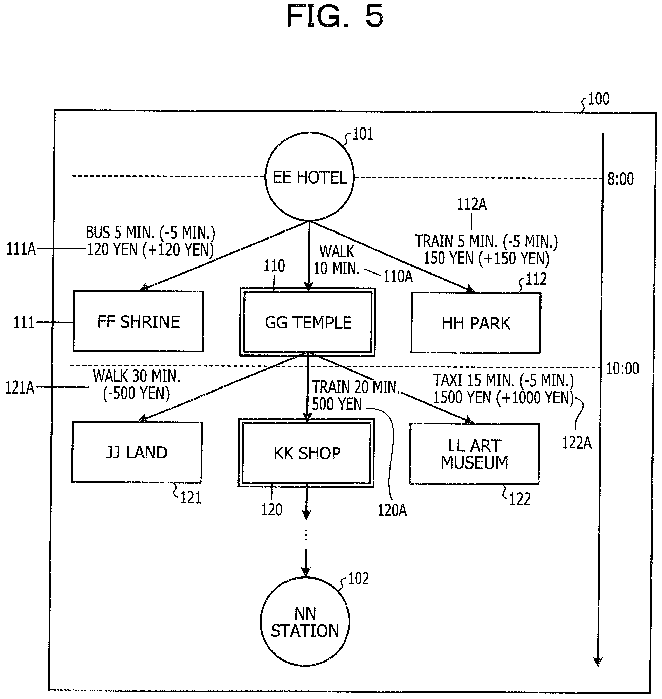

FIGs. 5 to 7 are diagrams illustrating examples of the route display screen. As illustrated in FIG. 5, in a route display screen 100, a route from a departure point 101 to a destination point 102 through transit points 110 and 120 is displayed along a time axis in a vertical direction by display data of the route display unit 17.

Here, in traveling sections in the route from the departure point 101 to the destination point 102 through the transit points 110 and 120, a traveling form corresponding to a smallest period of time or a smallest cost among the traveling forms obtained by the route searching unit 15 and guide information 110A and guide information 120A which indicate periods of time and costs of the traveling forms are displayed. For example, in a traveling section between the departure point 101 and the transit point 110, the guide information 110A of "10-minute walk" is displayed. By this, a user of the terminal device 2 may easily recognize the traveling forms, the periods of time, and the costs for individual traveling sections in the obtained route.

Furthermore, in the transit point 110, candidate points 111 and 112 which are substitutes of the transit point 110 are displayed in parallel to the transit point 110. Furthermore, guide information 111A and guide information 112A for a route from the departure point 101 to the candidate point 111 and a route from the departure point 101 to the candidate point 112, respectively, are displayed so as to correspond to the candidate points 111 and 112 based on the result of the search performed by the route searching unit 15. Specifically, traveling forms corresponding to a smallest period of time or a smallest cost and the periods of time and the costs corresponding to the traveling forms in the routes from the departure point 101 to the candidate points 111 and 112 are displayed in the guide information 111A and the guide information 112A, respectively. Furthermore, an increased time or a decreased time relative to the period of time in the guide information 110A of the transit point 110 is displayed in addition to the periods of time of the guide information 111A and the guide information 112A. Furthermore, an increased value or a decreased value relative to the cost in the guide information 110A of the transit point 110 is displayed in addition to the costs of the guide information 111A and the guide information 112A.

Similarly, candidate points 121 and 122 which are substitutes of the transit point 120 are displayed in parallel to the transit point 120, and guide information 121A and guide information 122A are displayed for the candidate points 121 and 122.

By this, the user of the terminal device 2 may easily compare the transit point 110 with the candidate points 111 and 112 and easily compare the transit point 120 with the candidate points 121 and 122.

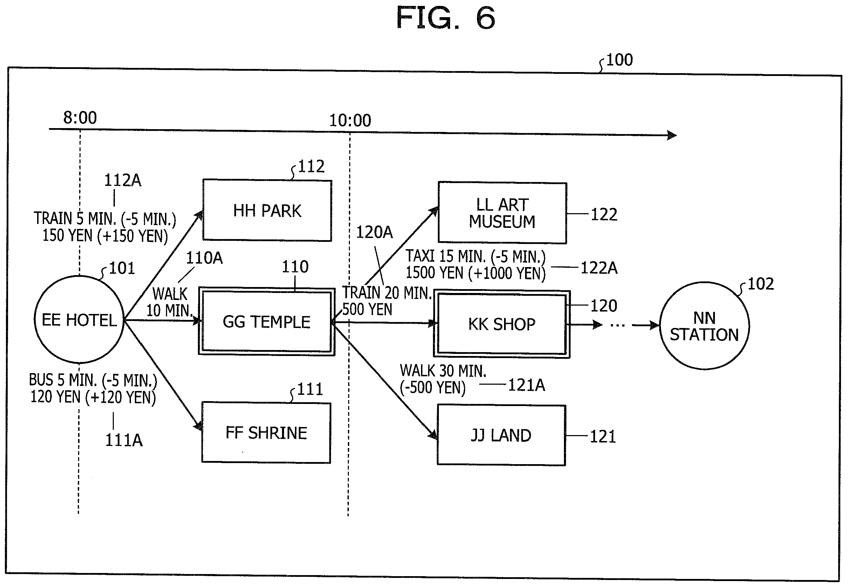

Note that, in the route display screen 100, the route from the departure point 101 through the transit points 110 and 120 to the destination point 102 may be displayed along a time axis in a horizontal direction as illustrated in FIG. 6. In this case, the candidate points 111 and 112 which are substitutes of the transit point 110 and the candidate points 121 and 122 which are substitutes of the transit point 120 may be displayed in parallel to the transit point 110 and the transit point 120, respectively, in a vertical direction.

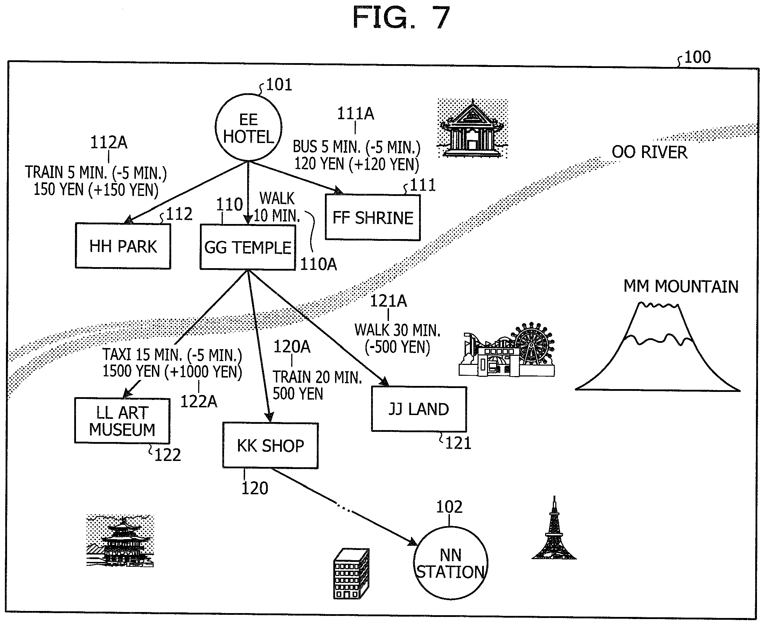

Furthermore, in the route display screen 100, the route from the departure point 101 through the transit points 110 and 120 to the destination point 102 may be displayed on a map as illustrated in FIG. 7with reference to map information (not illustrated) stored in the transit point 120. In this case, the candidate points 111 and 112 which are the substitutes of the transit point 110 and the candidate points 121 and 122 which are the substitutes of the transit point 120 may be displayed on the map.

Next, the controller 13 determines whether a candidate point has been selected in any of the transit points based on an operation performed by the terminal device 2 on the route display screen 100 obtained by the reception unit 14 (S9). When the determination is negative (S9: NO), the controller 13 proceeds to step S11.

When the determination is affirmative (S9: YES), the route display unit 17 generates display data for display of a route through the candidate point as a transit point based on the route information on the candidate point and periods of time and costs for individual traveling forms which are obtained by the route searching performed by the route searching unit 15. Subsequently, the route display unit 17 transmits the generated display data to the terminal device 2 through the communication unit 11. Specifically, the route display unit 17 generates a web page for displaying the route through the selected candidate point without changing points before and after the selected transit point and outputs the web page to the terminal device 2. Accordingly, in the route display screen 100 of the terminal device 2, the route through the selected candidate point as the transit point is displayed without changing points before and after the selected transit point (S10).

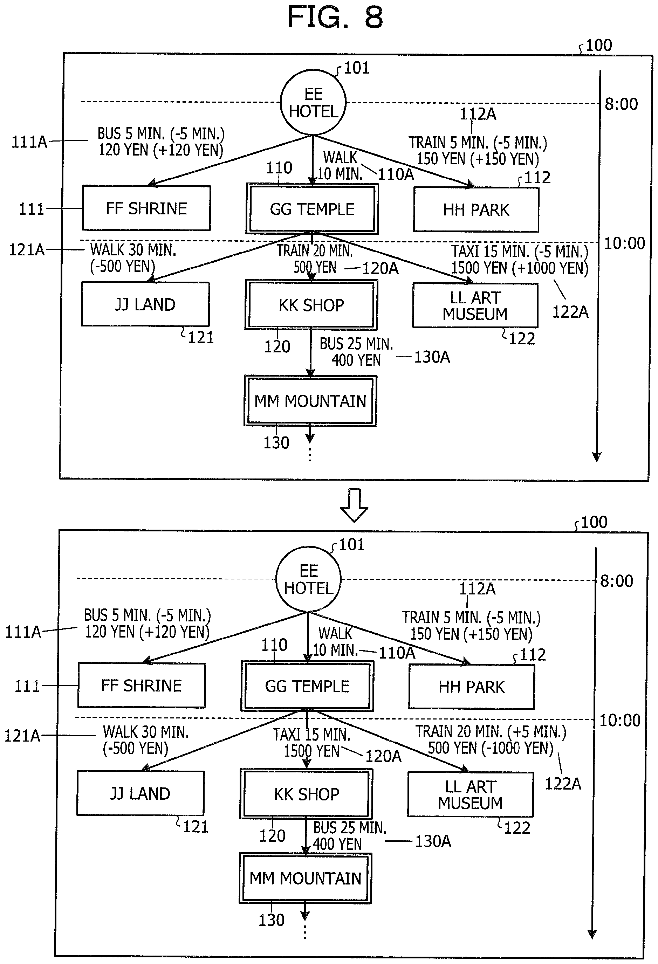

FIG. 8 is an explanatory diagram illustrating the display of the route through the selected candidate. In the route display screen 100 on an upper side in FIG. 8, "KK shop" is set as the transit point 120 and "JJ land" and "LL art museum" are displayed as the candidate points 121 and 122, respectively, which are substitutes of the transit point 120.

It is assumed here that the user of the terminal device 2 selects the candidate point 122 of "LL art museum". In this case, as displayed in the route display screen 100 on a lower side in FIG. 8, a route through "LL art museum" as the transit point 120 is displayed without changing the transit point 110 and a transit point 130 before and after the transit point 120, respectively. Furthermore, the guide information 120A in the traveling section from the transit point 110 to the transit point 120 is updated by information obtained based on information on a route associated with the selected candidate point and a period of time and a cost for a traveling form. Similarly, guide information 130A in a traveling section from the transit point 120 to the transit point 130 is updated based on information on the route associated with the selected candidate point and a period of time and a cost for a traveling form. In this way, the user of the terminal device 2 may freely select a desired one of the candidate points 121 and 122 as a substitute of the transit point 120 and may easily search for a route including the selected point as the new transit point 120.

Referring back to FIG. 4, the controller 13 determines whether an instruction for determining a route has been issued based on an operation performed by the terminal device 2 in the route display screen 100 obtained from the reception unit 14 (S11). When the determination is negative (S11: NO), the controller 13 returns to step S9.

When the determination is affirmative (S11: YES), the travel plan generation unit 19 registers the route being displayed in the travel plan DB 12b as a new travel plan (S12).

Next, a process of receiving a designation of a travel plan for displaying an itinerary in detail from among a plurality of travel plans and displaying a route display screen which is performed by the information processing apparatus 10 will now be described in detail.

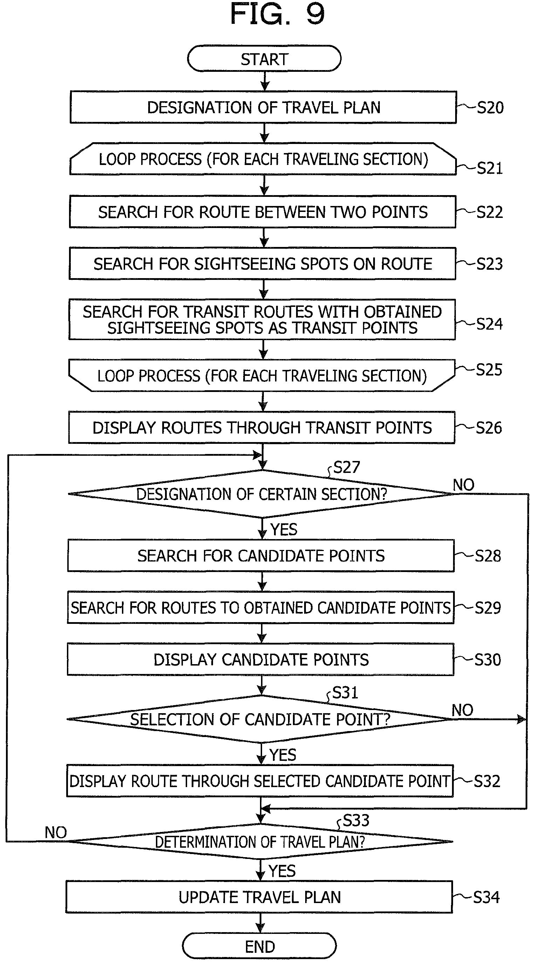

FIG. 9 is a flowchart of an example of an operation performed by the information processing apparatus 10 according to the embodiment. As illustrated in FIG. 9, when the process is started, the reception unit 14 displays a list of travel plans or the like registered in the travel plan DB 12b in the terminal device 2 and receives a designation of one of the travel plans in the list to be displayed in detail as an itinerary (S20).

Thereafter, the route searching unit 15 reads an itinerary of the designated travel plan from the travel plan DB 12b and executes a loop process (S21 to S25) for each traveling section in the itinerary.

When the loop process is started, the route searching unit 15 searches for a route between two points in a traveling section to be processed (S22). Specifically, the route searching unit 15 notifies the position specifying server and the route searching server included in the server group 1 of information on the two points in the traveling section to be processed and obtains route information on a route between the two points and a period of time and a cost for each traveling form.

Subsequently, the transit point/candidate point searching unit 16 searches the sightseeing spot DB 12a for sightseeing spots on the route based on the route information obtained by the route searching performed in step S22 (S23). Specifically, the transit point/candidate point searching unit 16 searches the sightseeing spot DB 12a for sightseeing spots located within a predetermined distance from the route.

Then the route searching unit 15 determines the sightseeing spots on the obtained route as transit points between the designated two points and searches for transit routes through the transit points between the two points similarly to the process in step S22 (S24). In this way, the information processing apparatus 10 obtains route information in a case where transit points in the traveling section to be processed are visited and periods of time and costs for individual traveling forms.

After the process from step S21 to step S25, the route display unit 17 generates display data for a transit display screen for displaying routes (itineraries) through the transit points based on the route information and the periods of time and the costs for individual traveling forms which are obtained through the loop process performed for individual traveling sections. The route display unit 17 transmits the generated display data to the terminal device 2 through the communication unit 11. In this way, the route display screen 100 associated with the designated travel plan is displayed in the terminal device 2 (S26).

Subsequently, the controller 13 determines whether an instruction for specifying a certain traveling section has been issued based on an operation performed by the terminal device 2 on the route display screen 100 obtained by the reception unit 14 (S27). When the determination is negative (S27: NO), the controller 13 proceeds to step S33.

When the determination is affirmative (S27: YES), the transit point/candidate point searching unit 16 searches for candidate points in the specified traveling section (S28). Specifically, the transit point/candidate point searching unit 16 searches the sightseeing spot DB 12a for sightseeing spots within a predetermined distance from the route in the specified traveling section and determines the obtained sightseeing spots as candidates of visiting points (candidate points).

The route searching unit 15 searches for routes through the candidate points (the sightseeing spots) obtained in step S28 in the traveling section similarly to the process in step S22 (S29). In this way, the information processing apparatus 10 obtains route information in a case where candidate points in the traveling section to be processed are visited and periods of time and costs for individual traveling forms.

The candidate display unit 18 adds display data for displaying the candidate points obtained by the transit point/candidate point searching unit 16 in the traveling section specified in the route display screen 100 to the display data of the route display screen and transmits the display data to the terminal device 2. In this way, the candidate points which are new visiting points in the specified traveling section are displayed in the route display screen of the terminal device 2 (S30).

Next, the controller 13 determines whether one of the candidate points has been selected based on an operation performed by the terminal device 2 on the route display screen 100 obtained by the reception unit 14 (S31). When the determination is negative (S31: NO), the controller 13 proceeds to step S33.

When the determination is affirmative (S31: YES), the route display unit 17 generates display data for displaying a route through the candidate point as a transit point based on route information on the candidate point and periods of time and costs for individual traveling forms which are obtained by the route searching performed by the route searching unit 15. Thereafter, the route display unit 17 transmits the generated display data to the terminal device 2 through the communication unit 11. Specifically, the route display unit 17 generates a web page for displaying the route through the selected candidate point without changing points before and after the selected transit point and outputs the web page to the terminal device 2. In this way, a route including the selected one of the candidate points in the traveling section as a new visiting point is displayed in the route display screen 100 of the terminal device 2 (S32).

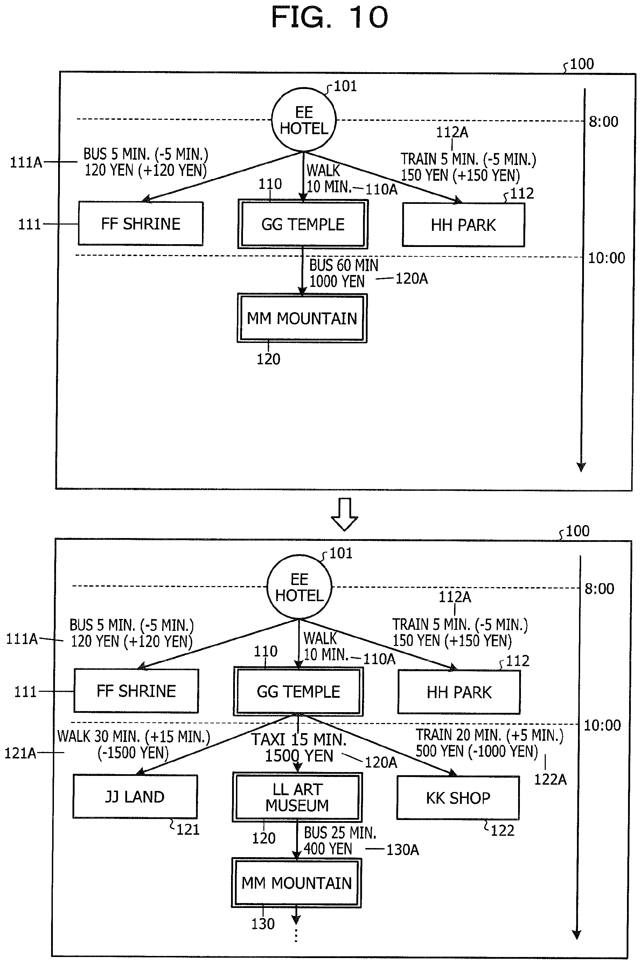

FIG. 10 is an explanatory diagram illustrating display of candidate points after specifying a section. In the route display screen 100 on an upper side in FIG. 10, "GG temple" corresponding to the transit point 110 is followed by "MM mountain" corresponding to the transit point 120.

It is assumed here that the user of the terminal device 2 specifies a traveling section between the transit points 110 and 120. In this case, as illustrated in the route display screen 100 on a lower side in FIG. 10, the candidate points 121 and 122 which are candidates of new visiting points are displayed in the traveling section between the transit points 110 and 120. Furthermore, guide information 121A and guide information 122A for a route from the departure point 101 to the candidate point 121 and a route from the transit point 110 to the candidate points 122, respectively, are displayed so as to correspond to the candidate points 121 and 122 based on a result of the search performed by the route searching unit 15. Specifically, one of traveling forms which corresponds to a smallest period of time and a smallest cost and the period of time (for traveling) and the cost corresponding to the traveling form in the routes from the transit point 110 to the candidate points 121 and 122 are displayed in the guide information 121A and the guide information 122A, respectively. By this, the user may recognize the traveling times and the costs to visit the new visiting points.

Here, when "LL art museum" is selected, the selected "LL art museum" is determined as the transit point 120 which is to be newly visited between the "GG temple" corresponding to the transit point 110 and the "MM mountain" corresponding to the transit point 130. In this way, the user of the terminal device 2 may easily generate a route through the new visiting point.

Referring back to FIG. 9, after the process in step S32, the controller 13 determines whether an instruction for determining a travel plan has been issued based on an operation performed by the terminal device 2 on the route display screen 320 obtained from the reception unit 14 (S33). When the determination is negative (S33: NO), the controller 13 returns to step S27.

When the determination is affirmative (S33:YES), the travel plan generation unit 19 updates the travel plans registered in the travel plan DB 12b based on the route being displayed (S34). By this, when a new visiting point has been added in the traveling section, content of the travel plan registered in the travel plan DB 12b is updated to a travel plan to which content of the addition is reflected.

As described above, the information processing apparatus 10 causes the terminal device 2 to display the route display screen for displaying routes from a departure point to a destination point. When displaying a plurality of transit points on the route display screen, the information processing apparatus 10 displays candidates of the transit points which are substitutes of the transit points in the route display screen. Furthermore, when one of the candidates of the transit points is selected in one of the transit points in the route display screen, the information processing apparatus 10 displays a route obtained by setting the selected one of the candidates of the transit points as a new transit point in the route display screen without changing points before and after the selected one of the transit points in which the candidates of the transit points are selected. Accordingly, the user of the terminal device 2 may easily search for a route through the transit point. For example, the user of the terminal device 2 may freely select a desired one of the transit points from among the candidates of the transit points and may easily search for a route including the selected one of the candidates of the transit points as a new transit point.

Furthermore, when displaying the candidate points (sightseeing spots) to be visited in a certain traveling section after the traveling section is designated and receiving a selection of a new visiting point from the terminal device 2, the information processing apparatus 10 adds a selected one of the sightseeing spots to the route (the travel plan) as a new visiting point to be added to the designated traveling section. By this, the user of the terminal device 2 may easily generate a route (a plan of a travel) through the new visiting point.

Furthermore, it is not necessarily the case that the components included in the illustrated units are physically configured as illustrated. Specifically, concrete modes of distribution and integration of the units are not limited to those in the drawings, and all or a number of the units may be functionally or physically distributed or integrated in an arbitrary unit depending on various loads, use states, and the like. For example, the route searching unit 15 and the transit point/candidate point searching unit 16 may be integrated as a searching unit, or the route display unit 17 and the candidate display unit 18 may be integrated as a display unit.

Furthermore, all or an arbitrary number of the various processing functions of the apparatuses may be executed on a central processing unit (CPU) (or a microcomputer, such as a micro processing unit (MPU) or a micro controller unit (MCU)). Furthermore, all or an arbitrary number of the various processing functions may be executed on programs which are analyzed and executed by the CPU (or a microcomputer, such as an MPU or an MCU) or hardware by a wired logic.

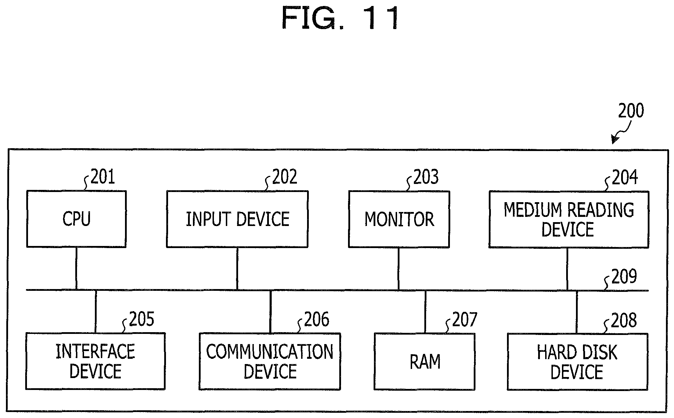

The various processes described in the foregoing embodiment may be realized when a computer executes programs provided in advance. Therefore, a computer which executes programs having functions the same as those in the foregoing embodiment will be illustrated hereinafter. FIG. 11 is a diagram illustrating an example of a computer which executes programs.

As illustrated in FIG. 11, a computer 200 includes a CPU 201 which executes various calculation processes, an input device 202 which receives data input, and a monitor 203. The computer 200 further includes a medium reading device 204 which reads programs from a recording medium, an interface device 205 used for connection to various devices, and a communication device 206 for connection to other information processing apparatuses in a wired manner or a wireless manner. The computer 200 further includes a random access memory (RAM) 207 which temporarily stores various information and a hard disk device 208. Furthermore, the devices 201 to 208 are connected to a bus 209.

The hard disk device 208 stores programs having the functions of the reception unit 14, the route searching unit 15, the transit point/candidate point searching unit 16, the route display unit 17, the candidate display unit 18, and the travel plan generation unit 19. The hard disk device 208 further stores various data which realize the functions of the reception unit 14, the route searching unit 15, the transit point/candidate point searching unit 16, the route display unit 17, the candidate display unit 18, and the travel plan generation unit 19. The input device 202 receives input of various information from a user of the computer 200, for example. The monitor 203 displays various screens for the user of the computer 200, for example. The interface device 205 is connected to a printing apparatus, for example. The communication device 206 has the function of the communication unit 11 illustrated in FIG. 1, is connected to a communication network, such as the Internet, and performs transmission and reception of various information with the server group 1, the terminal device 2, and the like on the communication network.

The CPU 201 performs various processes by reading the programs stored in the hard disk device 208 and developing and executing the programs in the RAM 207. Furthermore, the programs may cause the CPU 201 to function as the reception unit 14, the route searching unit 15, the transit point/candidate point searching unit 16, the route display unit 17, the candidate display unit 18, and the travel plan generation unit 19 illustrated in FIG. 2.

Note that the programs described above may not be stored in the hard disk device 208. For example, programs stored in a storage medium readable by the computer 200 may be read and executed by the computer 200. Examples of the storage medium readable by the computer 200 include a portable recording medium, such as a compact disk read only memory (CD-ROM), a digital versatile disk (DVD), and a universal serial bus (USB) memory, a semiconductor memory, such as a flash memory, and a hard disk drive. Furthermore, the programs may be stored in an apparatus connected to a public line, the Internet, a local area network (LAN), or the like and the computer 200 may read and execute the programs from the apparatus.

## Claims

1. A method of displaying a traveling route from a first point (101) to a second point (102) executed by a computer, the method comprising:
receiving information specifying the first point and the second point;
displaying a first traveling route including a plurality of transit points (110, 120) between the first point and the second point wherein the first point, the second point, and a first transit point (110, 120) are displayed in parallel in a first direction,
determining another transit point (111, 112, 121, 122) which is a substitute of the first transit point included in a plurality of transit points indicating sightseeing spots, by searching a sightseeing spot database (12a) for sightseeing spots located near the first transit point and determining an obtained sightseeing spot as a substitute candidate of the first transit point,
wherein the sightseeing spot database (12a) stores at least one of a sightseeing spot name, an area, a prefecture indicating a location, positional information indicating a position, a nearest station, opening hours, a regular holiday, a mean sojourn time, and a cost indicating expenses for a visit which are associated with one another;
displaying the another transit point together with the first traveling route wherein the another transit point and the first transit point are displayed in parallel in a second direction which is orthogonal to the first direction;
receiving a selection signal for selecting the another transit point instead of the first transit point; and
displaying, based on the selection signal, a second traveling route obtained by replacing the first transit point by the another transit point without changing a transit point coupled to the first transit point in the first traveling route.

2. The method according to claim 1, further comprising:
specifying a first traveling time for traveling in the first traveling route;
specifying a second traveling time for traveling in the second traveling route; and
displaying a difference between the first traveling time and the second traveling time.

3. The method according to claim 1, further comprising:
specifying at least one of a first transportation for the first traveling route, a first distance in the first traveling route, and a first cost for the first traveling route;
specifying a second transportation for the second traveling route, a second distance in the second traveling route, and a second cost for the second traveling route; and
displaying at least one of a difference between the first transportation and the second transportation, a difference between the first distance and the second distance, and a difference between the first cost and the second cost.

4. An information processing apparatus (10) configured to display a traveling route from a first point (101) to a second point (102), the information processing apparatus comprising:
a memory (12); and
a processor (13) coupled to the memory and configured to:
receive information specifying the first point and the second point,
display a first traveling route including a plurality of transit points (110, 120) between the first point and the second point wherein the first point, the second point, and a first transit point (110, 120) are displayed in parallel in a first direction,
determine another transit point (111, 112, 121, 122) which is a substitute of the first transit point included in a plurality of transit points indicating sightseeing spots, by
searching a sightseeing spot database (12a) for sightseeing spots located near the first transit point and determining an obtained sightseeing spot as a substitute candidate of the first transit point,
wherein the sightseeing spot database (12a) stores at least one of a sightseeing spot name, an area, a prefecture indicating a location, positional information indicating a position, a nearest station, opening hours, a regular holiday, a mean sojourn time, and a cost indicating expenses for a visit which are associated with one another;
display the another transit point together with the first traveling route wherein the another transit point and the first transit point are displayed in parallel in a second direction which is orthogonal to the first direction,
receive a selection signal for selecting the another transit point instead of the first transit point, and
display, based on the selection signal, a second traveling route obtained by replacing the first transit point by the another transit point without changing a transit point coupled to the first transit point in the first traveling route.

5. The information processing apparatus according to claim 4, wherein the processor is configured to:
specify a first traveling time for traveling in the first traveling route;
specify a second traveling time for traveling in the second traveling route, and
display a difference between the first traveling time and the second traveling time.

6. The information processing apparatus according to claim 4, wherein the processor is configured to:
specify at least one of a first transportation for the first traveling route, a first distance in the first traveling route, and a first cost for the first traveling route,
specify a second transportation for the second traveling route, a second distance in the second traveling route, and a second cost for the second traveling route, and
display at least one of a difference between the first transportation and the second transportation, a difference between the first distance and the second distance, and a difference between the first cost and the second cost.

7. A program that causes an information processing apparatus (10) to execute a process of displaying a traveling route from a first point (101) to a second point (102), the process comprising:
receiving information specifying the first point and the second point;
displaying a first traveling route including a plurality of transit points (110, 120) between the first point and the second point wherein the first point, the second point, and a first transit point (110, 120) are displayed in parallel in a first direction,
determining another transit point (111, 112, 121, 122) which is a substitute of the first transit point included in a plurality of transit points indicating sightseeing spots, by searching a sightseeing spot database (12a) for sightseeing spots located near the first transit point and determining an obtained sightseeing spot as a substitute candidate of the first transit point,
wherein the sightseeing spot database (12a) stores at least one of a sightseeing spot name, an area, a prefecture indicating a location, positional information indicating a position, a nearest station, opening hours, a regular holiday, a mean sojourn time, and a cost indicating expenses for a visit which are associated with one another;
displaying the another transit point together with the first traveling route wherein the another transit point and the first transit point are displayed in parallel in a second direction which is orthogonal to the first direction;
receiving a selection signal for selecting the another transit point instead of the first transit point; and
displaying, based on the selection signal, a second traveling route obtained by replacing the first transit point by the another transit point without changing a transit point coupled to the first transit point in the first traveling route.

8. The program according to claim 7, the process further comprising:
specifying a first traveling time for traveling in the first traveling route;
specifying a second traveling time for traveling in the second traveling route; and
displaying a difference between the first traveling time and the second traveling time.

9. The program according to claim 7, the process further comprising:
specifying at least one of a first transportation for the first traveling route, a first distance in the first traveling route, and a first cost for the first traveling route;
specifying a second transportation for the second traveling route, a second distance in the second traveling route, and a second cost for the second traveling route; and
displaying at least one of a difference between the first transportation and the second transportation, a difference between the first distance and the second distance, and a difference between the first cost and the second cost.

## Patentansprüche

1. Verfahren zum Anzeigen einer Reiseroute von einem ersten Punkt (101) zu einem zweiten Punkt (102), das von einem Computer ausgeführt wird, wobei das Verfahren umfasst:
Empfangen von Informationen, die den ersten Punkt und den zweiten Punkt spezifizieren;
Anzeigen einer ersten Reiseroute, die eine Vielzahl von Transitpunkten (110, 120) zwischen dem ersten Punkt und dem zweiten Punkt einschließt, wobei der erste Punkt, der zweite Punkt und ein erster Transitpunkt (110, 120) parallel in einer ersten Richtung angezeigt werden,
Bestimmen eines anderen Transitpunkts (111, 112, 121, 122), der ein Ersatz des ersten Transitpunkts ist, der in einer Vielzahl von Sehenswürdigkeiten angebenden Transitpunkten eingeschlossen ist, durch Durchsuchen einer Sehenswürdigkeiten-Datenbank (12a) nach Sehenswürdigkeiten, die nahe des ersten Transitpunkts liegen, und Bestimmen einer erhaltenen Sehenswürdigkeit als einen Ersatzkandidaten für den ersten Transitpunkt,
wobei die Sehenswürdigkeiten-Datenbank (12a) mindestens eines aus einem Sehenswürdigkeiten-Namen, einer Region, einem Verwaltungsbezirk, der einen Standort angibt, Positionsinformationen, die eine Position angeben, einer nächstgelegenen Station, Öffnungszeiten, einem gesetzlichen Feiertag, einer mittleren Verweilzeit, und einem Preis, der Aufwendungen für einen Besuch angibt, speichert, die miteinander assoziiert sind;
Anzeigen des anderen Transitpunkts zusammen mit der ersten Reiseroute, wobei der andere Transitpunkt und der erste Transitpunkt parallel in einer zweiten Richtung angezeigt werden, die zur ersten Richtung orthogonal ist;
Empfangen eines Auswahlsignals zum Auswählen des anderen Transitpunkts anstelle des ersten Transitpunkts; und
Anzeigen, auf Basis des Auswahlsignals, einer zweiten Reiseroute, die durch Ersetzen des ersten Transitpunkts durch den anderen Transitpunkt erhalten wird, ohne einen Transitpunkt, der mit dem ersten Transitpunkt in der ersten Reiseroute gekoppelt ist, zu verändern.

2. Verfahren nach Anspruch 1, weiter umfassend:
Spezifizieren einer ersten Reisezeit zum Reisen auf der ersten Reiseroute;
Spezifizieren einer zweiten Reisezeit zum Reisen auf der zweiten Reiseroute; und
Anzeigen eines Unterschieds zwischen der ersten Reisezeit und der zweiten Reisezeit.

3. Verfahren nach Anspruch 1, weiter umfassend:
Spezifizieren von mindestens einem aus einem ersten Transport für die erste Reiseroute, einer ersten Entfernung auf der ersten Reiseroute, und einem ersten Preis für die erste Reiseroute;
Spezifizieren eines zweiten Transports für die zweite Reiseroute, einer zweiten Entfernung auf der zweiten Reiseroute, und eines zweiten Preises für die zweite Reiseroute; und
Anzeigen von mindestens einem aus einem Unterschied zwischen dem ersten Transport und dem zweiten Transport, einem Unterschied zwischen der ersten Entfernung und der zweiten Entfernung, und einem Unterschied zwischen dem ersten Preis und dem zweiten Preis.

4. Informationsverarbeitungseinrichtung (10), die dazu konfiguriert ist, eine Reiseroute von einem ersten Punkt (101) zu einem zweiten Punkt (102) anzuzeigen, wobei die Informationsverarbeitungseinrichtung umfasst:
einen Speicher (12); und
einen Prozessor (13), der mit dem Speicher gekoppelt und dazu konfiguriert ist:
Informationen zu empfangen, die den ersten Punkt und den zweiten Punkt spezifizieren,
eine erste Reiseroute anzuzeigen, die eine Vielzahl von Transitpunkten (110, 120) zwischen dem ersten Punkt und dem zweiten Punkt einschließt, wobei der erste Punkt, der zweite Punkt und ein erster Transitpunkt (110, 120) parallel in einer ersten Richtung angezeigt werden,
einen anderen Transitpunkt (111, 112, 121, 122), der ein Ersatz des ersten Transitpunkts ist, der in einer Vielzahl von Sehenswürdigkeiten angebenden Transitpunkten eingeschlossen ist, durch Durchsuchen einer Sehenswürdigkeiten-Datenbank (12a) nach Sehenswürdigkeiten, die nahe des ersten Transitpunkts liegen, und Bestimmen einer erhaltenen Sehenswürdigkeit als einen Ersatzkandidaten für den ersten Transitpunkt zu bestimmen,
wobei die Sehenswürdigkeiten-Datenbank (12a) mindestens eines aus einem Sehenswürdigkeiten-Namen, einer Region, einem Verwaltungsbezirk, der einen Standort angibt, Positionsinformationen, die eine Position angeben, einer nächstgelegenen Station, Öffnungszeiten, einem gesetzlichen Feiertag, einer mittleren Verweilzeit, und einem Preis, der Aufwendungen für einen Besuch angibt, speichert, die miteinander assoziiert sind;
den anderen Transitpunkt zusammen mit der ersten Reiseroute anzuzeigen, wobei der andere Transitpunkt und der erste Transitpunkt parallel in einer zweiten Richtung angezeigt werden, die zur ersten Richtung orthogonal ist,
ein Auswahlsignal zum Auswählen des anderen Transitpunkts anstelle des ersten Transitpunkts zu empfangen, und
auf Basis des Auswahlsignals eine zweite Reiseroute anzuzeigen, die durch Ersetzen des ersten Transitpunkts durch den anderen Transitpunkt erhalten wird, ohne einen Transitpunkt, der mit dem ersten Transitpunkt in der ersten Reiseroute gekoppelt ist, zu verändern.

5. Informationsverarbeitungseinrichtung nach Anspruch 4, wobei der Prozessor dazu konfiguriert ist:
eine erste Reisezeit zum Reisen auf der ersten Reiseroute zu spezifizieren;
eine zweite Reisezeit zum Reisen auf der zweiten Reiseroute zu spezifizieren, und
einen Unterschied zwischen der ersten Reisezeit und der zweiten Reisezeit anzuzeigen.

6. Informationsverarbeitungseinrichtung nach Anspruch 4, wobei der Prozessor dazu konfiguriert ist:
mindestens eines aus einem ersten Transport für die erste Reiseroute, einer ersten Entfernung auf der ersten Reiseroute, und einem ersten Preis für die erste Reiseroute zu spezifizieren,
einen zweiten Transport für die zweite Reiseroute, eine zweite Entfernung auf der zweiten Reiseroute, und einen zweiten Preis für die zweite Reiseroute zu spezifizieren, und
mindestens eines aus einem Unterschied zwischen dem ersten Transport und dem zweiten Transport, einem Unterschied zwischen der ersten Entfernung und der zweiten Entfernung, und einem Unterschied zwischen dem ersten Preis und dem zweiten Preis anzuzeigen.

7. Programm, das eine Informationsverarbeitungseinrichtung (10) veranlasst, einen Prozess des Anzeigens einer Reiseroute von einem ersten Punkt (101) zu einem zweiten Punkt (102) auszuführen, wobei der Prozess umfasst:
Empfangen von Informationen, die den ersten Punkt und den zweiten Punkt spezifizieren;
Anzeigen einer ersten Reiseroute, die eine Vielzahl von Transitpunkten (110, 120) zwischen dem ersten Punkt und dem zweiten Punkt einschließt, wobei der erste Punkt, der zweite Punkt und ein erster Transitpunkt (110, 120) parallel in einer ersten Richtung angezeigt werden,
Bestimmen eines anderen Transitpunkts (111, 112, 121, 122), der ein Ersatz des ersten Transitpunkts ist, der in einer Vielzahl von Sehenswürdigkeiten angebenden Transitpunkten eingeschlossen ist, durch Durchsuchen einer Sehenswürdigkeiten-Datenbank (12a) nach Sehenswürdigkeiten, die nahe des ersten Transitpunkts liegen, und Bestimmen einer erhaltenen Sehenswürdigkeit als einen Ersatzkandidaten für den ersten Transitpunkt,
wobei die Sehenswürdigkeiten-Datenbank (12a) mindestens eines aus einem Sehenswürdigkeiten-Namen, einer Region, einem Verwaltungsbezirk, der einen Standort angibt, Positionsinformationen, die eine Position angeben, einer nächstgelegenen Station, Öffnungszeiten, einem gesetzlichen Feiertag, einer mittleren Verweilzeit, und einem Preis, der Aufwendungen für einen Besuch angibt, speichert, die miteinander assoziiert sind;
Anzeigen des anderen Transitpunkts zusammen mit der ersten Reiseroute, wobei der andere Transitpunkt und der erste Transitpunkt parallel in einer zweiten Richtung angezeigt werden, die zur ersten Richtung orthogonal ist;
Empfangen eines Auswahlsignals zum Auswählen des anderen Transitpunkts anstelle des ersten Transitpunkts; und
Anzeigen, auf Basis des Auswahlsignals, einer zweiten Reiseroute, die durch Ersetzen des ersten Transitpunkts durch den anderen Transitpunkt erhalten wird, ohne einen Transitpunkt, der mit dem ersten Transitpunkt in der ersten Reiseroute gekoppelt ist, zu verändern.

8. Programm nach Anspruch 7, wobei der Prozess weiter umfasst:
Spezifizieren einer ersten Reisezeit zum Reisen auf der ersten Reiseroute;
Spezifizieren einer zweiten Reisezeit zum Reisen auf der zweiten Reiseroute; und
Anzeigen eines Unterschieds zwischen der ersten Reisezeit und der zweiten Reisezeit.

9. Programm nach Anspruch 7, wobei der Prozess weiter umfasst:
Spezifizieren von mindestens einem aus einem ersten Transport für die erste Reiseroute, einer ersten Entfernung auf der ersten Reiseroute, und einem ersten Preis für die erste Reiseroute;
Spezifizieren eines zweiten Transports für die zweite Reiseroute, einer zweiten Entfernung auf der zweiten Reiseroute, und eines zweiten Preises für die zweite Reiseroute; und
Anzeigen von mindestens einem aus einem Unterschied zwischen dem ersten Transport und dem zweiten Transport, einem Unterschied zwischen der ersten Entfernung und der zweiten Entfernung, und einem Unterschied zwischen dem ersten Preis und dem zweiten Preis.

## Revendications

1. Procédé d'affichage d'un itinéraire de déplacement allant d'un premier point (101) à un second point (102) exécuté par un ordinateur, le procédé comprenant :
la réception d'informations spécifiant le premier point et le second point ;
l'affichage d'un premier itinéraire de déplacement incluant une pluralité de points de transit (110, 120) entre le premier point et le second point dans lequel le premier point, le second point, et un premier point de transit (110, 120) sont affichés en parallèle dans une première direction,
la détermination d'un autre point de transit (111, 112, 121, 122) qui est un substitut du premier point de transit inclus dans une pluralité de points de transit indiquant des sites touristiques, en recherchant dans une base de données de sites touristiques (12a) des sites touristiques situés à proximité du premier point de transit et en déterminant un site touristique obtenu en tant que candidat de substitution du premier point de transit,
dans lequel la base de données de sites touristiques (12a) stocke au moins un parmi un nom de site touristique, une zone, une préfecture indiquant un emplacement, des informations de position indiquant une position, une gare la plus proche, des heures d'ouverture, un congé habituel, une durée moyenne de séjour, et un coût indiquant les frais pour une visite qui sont associés les uns aux autres ;
l'affichage de l'autre point de transit conjointement avec le premier itinéraire de déplacement dans lequel l'autre point de transit et le premier point de transit sont affichés en parallèle dans une seconde direction qui est orthogonale à la première direction ;
la réception d'un signal de sélection pour sélectionner l'autre point de transit à la place du premier point de transit ; et
l'affichage, sur la base du signal de sélection, d'un second itinéraire de déplacement obtenu par le remplacement du premier point de transit par l'autre point de transit sans changer un point de transit couplé au premier point de transit dans le premier itinéraire de déplacement.

2. Procédé selon la revendication 1, comprenant en outre :
la spécification d'un premier temps de déplacement pour se déplacer dans le premier itinéraire de déplacement ;
la spécification d'un second temps de déplacement pour se déplacer dans le second itinéraire de déplacement ; et
l'affichage d'une différence entre le premier temps de déplacement et le second temps de déplacement.

3. Procédé selon la revendication 1, comprenant en outre :
la spécification d'au moins un parmi un premier moyen de transport pour le premier itinéraire de déplacement, une première distance dans le premier itinéraire de déplacement, et un premier coût pour le premier itinéraire de déplacement ;
la spécification d'un second moyen de transport pour le second itinéraire de déplacement, d'une seconde distance dans le second itinéraire de déplacement, et d'un second coût pour le second itinéraire de déplacement ; et
l'affichage d'au moins une parmi une différence entre le premier moyen de transport et le second moyen de transport, une différence entre la première distance et la seconde distance, et une différence entre le premier coût et le second coût.

4. Appareil de traitement d'informations (10) configuré pour afficher un itinéraire de déplacement allant d'un premier point (101) à un second point (102), l'appareil de traitement d'informations comprenant :
une mémoire (12) ; et
un processeur (13) couplé à la mémoire et configuré pour :
recevoir des informations spécifiant le premier point et le second point,
afficher un premier itinéraire de déplacement incluant une pluralité de points de transit (110, 120) entre le premier point et le second point dans lequel le premier point, le second point, et un premier point de transit (110, 120) sont affichés en parallèle dans une première direction,
déterminer un autre point de transit (111, 112, 121, 122) qui est un substitut du premier point de transit inclus dans une pluralité de points de transit indiquant des sites touristiques, en recherchant dans une base de données de sites touristiques (12a) des sites touristiques situés à proximité du premier point de transit et en déterminant un site touristique obtenu en tant que candidat de substitution du premier point de transit,
dans lequel la base de données de sites touristiques (12a) stocke au moins un parmi un nom de site touristique, une zone, une préfecture indiquant un emplacement, des informations de position indiquant une position, une gare la plus proche, des heures d'ouverture, un congé habituel, une durée moyenne de séjour, et un coût indiquant les frais pour une visite qui sont associés les uns aux autres ;
afficher l'autre point de transit conjointement avec le premier itinéraire de déplacement dans lequel l'autre point de transit et le premier point de transit sont affichés en parallèle dans une seconde direction qui est orthogonale à la première direction,
recevoir un signal de sélection pour sélectionner l'autre point de transit à la place du premier point de transit, et
afficher, sur la base du signal de sélection, un second itinéraire de déplacement obtenu par le remplacement du premier point de transit par l'autre point de transit sans changer un point de transit couplé au premier point de transit dans le premier itinéraire de déplacement.

5. Appareil de traitement d'informations selon la revendication 4, dans lequel le processeur est configuré pour :
spécifier un premier temps de déplacement pour se déplacer dans le premier itinéraire de déplacement ;
spécifier un second temps de déplacement pour se déplacer dans le second itinéraire de déplacement, et
afficher une différence entre le premier temps de déplacement et le second temps de déplacement.

6. Appareil de traitement d'informations selon la revendication 4, dans lequel le processeur est configuré pour :
spécifier au moins un parmi un premier moyen de transport pour le premier itinéraire de déplacement, une première distance dans le premier itinéraire de déplacement, et un premier coût pour le premier itinéraire de déplacement,
spécifier un second moyen de transport pour le second itinéraire de déplacement, une seconde distance dans le second itinéraire de déplacement, et un second coût pour le second itinéraire de déplacement, et
afficher au moins une parmi une différence entre le premier moyen de transport et le second moyen de transport, une différence entre la première distance et la seconde distance, et une différence entre le premier coût et le second coût.

7. Programme qui amène un appareil de traitement d'informations (10) à exécuter un processus d'affichage d'un itinéraire de déplacement allant d'un premier point (101) à un second point (102), le processus comprenant :
la réception d'information spécifiant le premier point et le second point ;
l'affichage d'un premier itinéraire de déplacement incluant une pluralité de points de transit (110, 120) entre le premier point et le second point dans lequel le premier point, le second point, et un premier point de transit (110, 120) sont affichés en parallèle dans une première direction,
la détermination d'un autre point de transit (111, 112, 121, 122) qui est un substitut du premier point de transit inclus dans une pluralité de points de transit indiquant des sites touristiques, en recherchant dans une base de données de sites touristiques (12a) des sites touristiques situés à proximité du premier point de transit et en déterminant un site touristique obtenu en tant que candidat de substitution du premier point de transit,
dans lequel la base de données de sites touristiques (12a) stocke au moins un parmi un nom de site touristique, une zone, une préfecture indiquant un emplacement, des informations de position indiquant une position, une gare la plus proche, des heures d'ouverture, un congé habituel, une durée moyenne de séjour, et un coût indiquant les frais pour une visite qui sont associés les uns aux autres ;
l'affichage de l'autre point de transit conjointement avec le premier itinéraire de déplacement dans lequel l'autre point de transit et le premier point de transit sont affichés en parallèle dans une seconde direction qui est orthogonale à la première direction ;
la réception d'un signal de sélection pour sélectionner l'autre point de transit à la place du premier point de transit ; et
l'affichage, sur la base du signal de sélection, d'un second itinéraire de déplacement obtenu par le remplacement du premier point de transit par l'autre point de transit sans changer un point de transit couplé au premier point de transit dans le premier itinéraire de déplacement.

8. Programme selon la revendication 7, le procédé comprenant en outre :
la spécification d'un premier temps de déplacement pour se déplacer dans le premier itinéraire de déplacement ;
la spécification d'un second temps de déplacement pour se déplacer dans le second itinéraire de déplacement ; et
l'affichage d'une différence entre le premier temps de déplacement et le second temps de déplacement.

9. Programme selon la revendication 7, le procédé comprenant en outre :
la spécification d'au moins un parmi un premier moyen de transport pour le premier itinéraire de déplacement, une première distance dans le premier itinéraire de déplacement, et un premier coût pour le premier itinéraire de déplacement ;
la spécification d'un second moyen de transport pour le second itinéraire de déplacement, d'une seconde distance dans le second itinéraire de déplacement, et d'un second coût pour le second itinéraire de déplacement ; et
l'affichage d'au moins une parmi une différence entre le premier moyen de transport et le second moyen de transport, une différence entre la première distance et la seconde distance, et une différence entre le premier coût et le second coût.
